# EUROPÄISCHE PATENTSCHRIFT

(11) **EP 0 855 973 B1**
(45) Veröffentlichungstag und Bekanntmachung des Hinweises auf die Patenterteilung: **12.12.2001**
(21) Anmeldenummer: 97941914.0
(22) Anmeldetag: 05.08.1997
(51) Int. Cl.: B60R 11/02

(54) **VERFAHREN UND ANORDNUNG ZUR VERÄNDERUNG DER FUNKTION EINES MOBILEN GERÄTES**
PROCESS AND DEVICE FOR MODIFYING THE FUNCTION OF A MOBILE APPARATUS
PROCEDE ET DISPOSITIF POUR MODIFIER LE FONCTIONNEMENT D'UN APPAREIL MOBILE

(30) Priorität: 20.08.1996 DE 19633417
(43) Veröffentlichungstag der Anmeldung: 05.08.1998
(73) Patentinhaber: GRUNDIG Aktiengesellschaft, 90471 Nürnberg (DE)
(72) Erfinder: BIENEFELD, Axel, D-90765 Fürth (DE)
(86) Internationale Anmeldenummer: EP9704259
(87) Internationale Veröffentlichungsnummer: WO9807595

(56) Entgegenhaltungen:
- DE-A- 4 107 021
- DE-A- 4 204 996
- US-A- 4 854 538
- US-A- 4 908 611
- PATENT ABSTRACTS OF JAPAN vol. 015, no. 194 (M-1114), 20.Mai 1991 & JP 03 050048 A (NISSAN MOTOR CO LTD), 4.März 1991,
- PATENT ABSTRACTS OF JAPAN vol. 015, no. 018 (E-1023), 16.Januar 1991 & JP 02 266772 A (NISSAN MOTOR CO LTD), 31.Oktober 1990,
- PATENT ABSTRACTS OF JAPAN vol. 016, no. 576 (M-1345), 16.Dezember 1992 & JP 04 224432 A (TOSHIBA CORP), 13.August 1992,
- PATENT ABSTRACTS OF JAPAN vol. 018, no. 098 (M-1562), 17.Februar 1994 & JP 05 301543 A (TOSHIBA CORP), 16.November 1993,
- PATENT ABSTRACTS OF JAPAN vol. 010, no. 001 (E-371), 7.Januar 1986 & JP 60 165177 A (SUMITOMO DENKI KOGYO KK), 28.August 1985,
- PATENT ABSTRACTS OF JAPAN vol. 011, no. 288 (E-542), 17.September 1987 & JP 62 086978 A (HITACHI LTD;OTHERS: 01), 21.April 1987,
- PATENT ABSTRACTS OF JAPAN vol. 097, no. 008, 29.August 1997 & JP 09 109791 A (DAIFURETSUKUSU:KK), 28.April 1997,

## Beschreibung

Die Erfindung betrifft ein Verfahren zur Veränderung der Funktion bei einem mobilen Gerät und eine Anordnung zur Durchführung des Verfahrens.

Aus dem Bereich der Hörfunkempfänger mit Datenempfängern ist bekannt, daß vom Sender gemäß den Spezifikationen des Radio-Daten-Systems ein Text an den Empfänger, beispielsweise ein Autoradio, übertragen und in dessen Anzeige dargestellt wird. Falls nun der Fahrer den in der Anzeige des Autoradios angezeigten Text lesen möchte, muß er zwangsläufig den Blick vom Verkehrsgeschehen abwenden, was während der Fahrt die Unfallwahrscheinlichkeit drastisch erhöht.

Weiterhin ist aus dem Artikel "Bewegte Bilder", erschienen in der Zeitschrift HIFI-Vision, Ausgabe 3/1991, bekannt, in einem Kraftfahrzeug einen Fernseher vorzusehen. Dabei wird nur dann auf dem Bildschirm des Femsehers ein Bild dargestellt, wenn die Zündung nicht aktiviert ist.

Dies weist den Nachteil auf, daß auch mitfahrende Personen während der Fahrt den Fernseher bzw. dessen Anzeigeeinheit nicht nutzen können.

Ein ähnliche Realisierung von Fernsehen im Auto ist aus dem Artikel "TV-Empfang im Auto", erschienen in der Zeitschrift Funkschau. Ausgabe 6/1995, bekannt, bei dem zwischen Stand-TV und Fahr-TV unterschieden wird. Beim Stand-TV ist der Fernseh-Bildschirm für den Fahrer sichtbar angeordnet und wird während der Fahrt für andere Zwecke als die Darstellung von Femsehbildem genutzt. Beim Fahr-TV wird der Femseh-Bildschirm so angebracht, daß der Fahrer ihn nicht einsehen kann. Gegebenenfalls ist ein weiterer Bildschirm im Fond des Kfz erforderlich, falls Mitfahrende auch während der Fahrt fernsehen möchten.

Dies weist den Nachteil auf, daß mehrere Anzeigeeinheiten vorgesehen werden müssen, um auch während der Fahrt mitfahrenden Personen die Möglichkeit zum Fernsehen zu geben.

Aus der DE 41 07 021 A1 ist eine Vorrichtung zur Darstellung von Femsehbildem in einem Kraftfahrzeug bekannt. Diese umfaßt einen an einer Mittelkonsole im Fahrgastraum des Kraftfahrzeugs installierten Femsehmonitor und einen vor dem Bildschirm des Fernsehmonitors angeordneten Flüssigkristallfilter, der das Licht des Bildschirms vorzugsweise in Richtung auf den Beifahrersitz durchläßt, so daß der Fahrer das Bildschirmbild nicht erkennen kann, sofern eine Spannung an einer Elektrode des Flüssigknstallfilters anliegt. Zusätzlich ist zwischen dem Fiüssigkristallfilter und dem Bildschirm ein Lamellenfilter vorgesehen, dessen Hauptfunktion darin besteht, eine Reflexion des Bildschirmbildes auf der Windschutzscheibe des Kraftfahrzeuges zu verhindern.

Aus DE-A-42 04 996 ist eine Einrichtung zur Bedienung von Geräten in einem Kraftfahrzeug bekannt. Diese Einrichtung ist mit einer beweglichen Bedieneinheit, deren Bedieninformationen zu einem Gerät übertragen werden ausgestattet. Bei fahrendem Fahrzeug ist eine Wirkung der Bedieneinheit zumindest teilweise gesperrt, wenn sich die Bedieneinheit in der Nähe des Fahrers befindet.
Es ist jedoch nicht bekannt über Detektoren die Position der Einrichtung zu erfassen und dies auszuwerten.

Dabei können Personen im Fond des Kraftfahrzeuges das Bildschirmbild ebenfalls nicht sehen. Weiterhin besteht die Gefahr, daß der Fahrer keine Spannung an die Elektrode des Flüssigkristallfilters anlegt, so daß er auch während der Fahrt den Bildschirm betrachten kann.

Mit der zunehmenden Verbreitung von Navigationssystemen. elektronischen Landkarten und weiteren optischen Anzeigesystemen, die den Fahrer eines Kraftfahrzeuges unterstützen sollen, nimmt die Wahrscheinlichkeit weiter zu, daß diese auch während der Fahrt vom Fahrer benutzt werden und dadurch die Unfalihäufigkeit zunimmt.

Es ist daher die Aufgabe der vorliegenden Erfindung ein Verfahren und eine Anordnung zur Durchführung dieses Verfahrens anzugeben, bei dem die oben genannten Nachteile vermieden werden und eine Ablenkung eines Fahrers während der Fahrt, insbesondere durch optische Anzeigen, zuverlässig verhindert wird, ohne dadurch die Nutzungsmöglichkeit zusätzlicher Informationsquellen, beispielsweise für mitfahrende Personen. wesentlich einzuschränken. Eine derartige Anordnung sollte zudem kostengünstig zu realisieren sein.

Diese Aufgabe wird durch die Merkmale der Ansprüche 1 und 3 gelöst.

Vorteilhafte Weiterbildungen sind den Unteransprüchen zu entnehmen.

Erfindungsgemäß werden die vom Gerät durchführbaren Funktionen in zwei Gruppen unterteilt, in solche, die einen Fahrer während einer Fahrt ablenken können und solche, durch die ein Fahrer während einer Fahrt nicht oder nur in sehr geringem Umfang abgelenkt werden kann. Die Funktionen, die einen Fahrer ablenken können, werden nur durchgeführt und/oder sind nur auswählbar, wenn delektiert wird, daß entweder die Fahrzeuggeschwindigkeit unter einer Maximalgeschwindigkeit liegt. oder daß sich weitere Personen im Fahrzeug befinden und Eingabe sowie Anzeigeeinrichtungen mittels einer flexiblen Befestigung derart ausgerichtet sind, daß der Fahrer diese weder bedienen noch ablesen kann.

Dadurch wird sichergestellt, daß der Funktionsumfang der jeweiligen Geräte bei stehendem oder besonders langsam fahrenden Fahrzeug vollständig auch dem Fahrer zur Verfügung steht. bei sich bewegendem Fahrzeug aber die Funktionen, durch die der Fahrer abgelenkt werden könnte, für den Fahrer gesperrt werden. Sollten sich weitere Personen im Fahrzeug befinden, werden die für den Fahrer gesperrten Funktionen für diese Personen nicht gesperrt. Welche Person das Gerät gerade bedient oder abliest wird mittels Detektoren daran erkannt, in welcher Position Eingabe- und Ausgabemittel durch die flexiblen Befestigungsmittel im Kraftfahrzeug angeordnet sind.

Die Merkmale der Ansprüche werden im folgenden an exemplarischen Ausführungsbeispielen anhand der Zeichnung erläutert. Die Ausführungsbeispiele sind keine erschöpfende Aufzählung der erfindungsgemäßen Ausgestaltungsmöglichkeiten, sondern haben nur beispielhaften Charakter. Die Merkmale der Ansprüche können einzeln oder in beliebiger Kombination miteinander benutzt werden.

Es zeigt:
- Fig. 1:: Eine mögliche Anordnung der erfindungsgemäßen Anordnung auf flexiblen Befestigungsmitteln und
- Fig. 2:: Eine mögliche Vorgehensweise bei der Steuerung von Ausgabemitteln.

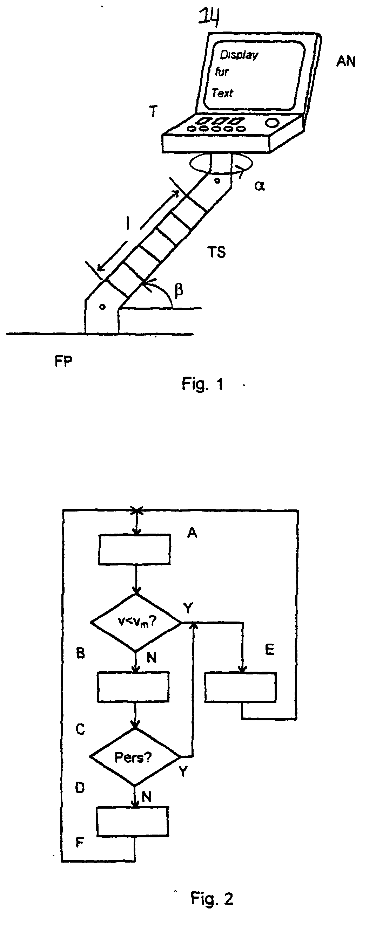

Fig. 1 zeigt die erfindungsgemäße Anordnung, bestehend aus einer Tastatur T als Eingabemittel und einer Anzeige AN als Ausgabemittel, welche auf flexiblen Befestigungsmittteln angeordnet sind. Weiterhin ist eine Steuereinheit vorgesehen, die über Leitungen mit den Ein- und Ausgabemittein verbunden wird und beliebig im Fahrzeug angeordnet werden kann. Die Steuereinheit ist weiterhin über Leitungen mit Detektoren verbunden, welche die Geschwindigkeit des Fahrzeugs und die Position der Ein- und Ausgabemittel detektieren.

Alternativ oder zusätzlich können Detektoren mit der Steuereinheit verbunden sein, welche feststellen, ob sich weitere Personen im Fahrzeug befinden.

Im folgenden wird von der Verwendung des Verfahrens in einem Kraftfahrzeug ausgegangen und davon, daß die Funktionen eines ebenfalls vorhandenen Navigationssystems beeinflußt werden. Das Navigationssystem soll die Anzeige AN aufweisen, auf der sowohl eine Straßenkarte als auch Texte dargestellt werden können.

Die flexible Befestigung der Ein- und Ausgabemittel des Navigationssystems erfolgt beispielsweise über eine in der Neigung β und Länge I veränderbare Teleskopstange TS, deren Fußpunkt FP vorzugsweise zwischen Fahrer- und Beifahrersitz des Kraftfahrzeugs angeordnet ist. Weiterhin sind die Ein-/Ausgabemrttel T und AN am Ende der Teleskopstange TS drehbar gelagert. Zusätzlich kann auch der Fußpunkt FP der Teleskopstange TS drehbar gelagert sein. Dadurch können sowohl Fahrer und Beifahrer als auch die Personen auf den Rücksitzen die Ein-/Ausgabemittel T, AN benutzen.

Zur Detektion der Position der Ein-/Ausgabemittel T, AN sind Detektoren vorgesehen, die den Neigungswinkel β der Teleskopstange TS, deren Länge I, den Drehwinkel α der Ein-/Ausgabemittel T, AN und gegebenenfalls den Drehwinkel am Fußpunkt FP der Teleskopstange TS quantitativ erfassen und an die Steuereinheit weiterleiten.

Altemativ oder zusätzlich sind Detektoren vorgesehen, die die Anwesenheit weiterer Personen im Fahrzeug detektieren. Dies können Schalter in den Sitzen. die ab einer Belastung der Sitzfläche von ca. 40 kg eine Person detektieren, oder Schalter in den Schlössem der Sicherheitsgurte sein, die ein Einrasten des Gurtschlosses detektieren. Weiterhin besteht die Möglichkeit, daß Infrarotmelder oder Lichtschranken als Detektoren benutzt werden.

Die Ausgangssignaie der Detektoren werden an die Steuereinheit zur Auswertung weitergeleitet.

Die Steuereinheit erhält weiterhin Informationen über die Geschwindigkeit des Fahrzeugs von einem entsprechenden Detektor, wie er bereits für die geräuschabhängige Lautstärkeanpassung bei Autoradios bekannt ist Solange eine Maximalgeschwindigkeit nicht überschritten wird. ist der volle Funktionsumfang des Navigationssystems uneingeschränkt verfügbar. Diese Maximalgeschwindigkeit ist sehr gering, um sicherzustellen, daß der Fahrer nicht während der Fahrt durch die Benutzung des Navigationssystems abgelenkt wird. Gegebenenfalls kann die Maximalgeschwindigkeit auch auf Null eingestellt werden.

In einem ersten, einfachen Ausführungsbeispiel sind nur Detektoren für die Geschwindigkeit und für im Fahrzeug vorhandene Personen vorgesehen. Die Steuereinheit ändert die bei dem Navigationssystem zur Verfügung stehenden Funktionen derart, daß alle Funktionen, die den Fahrer ablenken könnten, von der Steuereinheit nicht mehr ausgeführt werden, sobald die Maximalgeschwindigkeit überschritten wird und falls keine weiteren Personen im Fahrzeug detektiert werden. Die Position der Ein-/Ausgabeeinheit wird in diesem Ausführungsbeispiel nicht ermittelt. Detektieren die Detektoren mindestens einen Mitfahrer. steht permanent der volle Funktionsumfang des Navigationssystems zu Vefrügung.

In einem anderen Ausführungsbeispiel wird bei Überschreiten der Maximalgeschwindigkeit die mittels der Detektoren festgestellte Position der Ein-/Ausgabeeinheit T, AN von der Steuereinheit erfaßt und mit einem gespeicherten, verbotenen Bereich verglichen, der bestimmte Wertebereiche für die einzelnen Detektoren beinhaltet. Befindet sich die Ein-/Ausgabeeinheit T, AN in diesem Bereich, werden bestimmte Funktionen nicht mehr ausgeführt. Dieser Bereich wir dadurch festgelegt, daß die Eingabemittel T in Reichweite des Fahrers sind und/oder die Anzeigemittel AN vom Fahrer abgelesen werden können.

Weiterhin ist eine Kombination dieser beiden Ausführungsbeispiele möglich, um die Zuverlässigkeit des Systems zu steigern. Sobald die Maximalgeschwindigkeit überschritten wird, erfolgt dabei zunächst eine Überprüfung, ob sich außer dem Fahrer weitere Personen im Fahrzeug befinden. Ist dies nicht der Fall, werden bestimmte Funktionen unabhängig von der Position der Ein-/Ausgabeeinheit T, AN nicht ausgeführt. Dies hat den Vorteil, daß das System sicherer arbeitet. So können beispielsweise auch Spiegelungen an der Scheiben des Fahrzeugs nicht dazu führen, daß der Fahrer abgelenkt wird.

Sollten sich jedoch mehrere Personen im Fahrzeug befinden, so wird mittels der Detektorsignale von der Steuereinheit festgestellt, auf welchen Plätzen im Fahrzeug sich die Personen befinden. Der volle Funktionsumfang des Navigationssystems wird dann nur an solchen Positionen der Ein-/Ausgabeeinheit T, AN zugelassen, an denen diese nur von den mitfahrenden Personen problemlos benutzt werden können. Dadurch wird ein erlaubter Bereich für die Ein-/Ausgabeeinheit T, AN in Abhängigkeit von Mitfahrern festgelegt, in dem der volle Funktionsumfang des Navigationssystems zur Verfügung steht. Hierfür ist in einem Speicher für jeden Sitzplatz ein Bereich für die Position der Ein-/Ausgabeeinheit T, AN gespeichert, in dem der volle Funktionsumfang erlaubt ist. Die Steuereinheit ermittelt den insgesamt erlaubten Bereich aus den aufgrund der von den Mitfahrenden eingenommenen Plätze.

Die Funktionen, die nicht ausgeführt werden, sind derart, daß sie den Fahrer ablenken, also im wesentlichen optische Ausgaben und jegliche Eingaben. Alternativ zur Sperre optischer Ausgaben kann auch auf eine akustische Ausgabe umgeschaltet werden, wodurch bestimmte Funktionen lediglich verändert werden. Für die akustische Ausgabe weisen die Ausgabemittel AN zusätzlich einen Lautsprecher auf.

Bei der durch die Steuereinheit durchgeführten Steuerung der Funktionen des Navigationssystems gemäß Fig. 2 wird in einem ersten Schritt A der Geschwindigkeitsdetektor abgefragt und durch einen Vergleich im Schritt B festgestellt, welche Geschwindigkeit das Fahrzeug hat. Liegt diese unterhalb einer gespeicherten Maximalgeschwindigkeit, werden alle vom Benutzer gewählten Funktionen ohne Beschränkung im Schritt E ausgeführt.

Liegt die vom Detektor gemeldete Geschwindigkeit aber über der Maximalgeschwindigkeit, wird in einem ersten Ausführungsbeispiel festgestellt, ob Mitfahrer vorhanden sind. Dafür werden die Signale der entsprechenden Detektoren in den Sitzen, Gurtschlössem usw. im Schritt C von der Steuereinheit abgefragt und ausgewertet. Falls Mitfahrer delektiert wurden, steht im Schritt E eine Funktion aus dem vollen Funktionsumfang zur Verfügung, falls keine Mitfahrer detektiert wurden, führt die Steuereinheit im Schritt F nur eine Funktion aus, durch die der Fahrer höchstens geringfügig vom Verkehrsgeschehen abgelenkt wird. Das bedeutet, daß die Anzeige AN entweder ganz dunkel geschaltet wird oder zumindest keine häufig wechselnden Anzeigen erfolgen. Vor der Ausführung einer neuen Funktion wird wieder überprüft, ob die Geschwindigkeit immer noch unter der Maximalgeschwindigkeit liegt.

In einem zweiten Ausführungsbeispiel wertet die Steuereinheit die Detektorsignale der Detektoren, die die Position der Ein-/Ausgabeeinheit T, AN angeben und die des Geschwindigkeitsdetektors aus. Sobald die Maximalgeschwindigkeit überschritten wird, vergleicht die Steuereinheit die Detektorsignale mit in einem Speicher abgespeicherten Signalen, die einen verbotenen bzw. erlaubten Bereich für die Position der Ein-/Ausgabeeinheit T, AN des Navigationssystems zur Nutzung des vollen Funktionsumfangs definieren. Sobald sich die Ein-/Ausgabeeinheit T, AN in einem verbotenen Bereich bzw. nicht in einem erlaubten Bereich befinden, werden wiederum Eingaben des Benutzers von der Steuereinheit nicht verarbeitet und die Anzeige AN wird dunkel geschaltet oder es wird auf akustische Ausgabe umgeschaltet Hierfür werden im Verfahren gemäß Fig. 2 an Stelle der Detektoren, die Mitfahrer detektieren, Detektoren abgefragt, die die Position der Ein-/Ausgabemittel T, AN detektieren und es wird ein Vergleich mit nicht erlaubten Werten durchgeführt.

Derart können nicht nur Navigationssysteme in ihren Funktionen begrenzt werden, sondern auch beliebige andere Geräte, die in einem Kraftfahrzeug eine optische Ausgabe AN aufweisen, wie beispielsweise Fernseher, Videorekorder oder beliebige Datenempfänger.

## Patentansprüche

1. Verfahren zur Veränderung der Funktionen bei einem in einem Fahrzeug angeordneten Gerät, dessen Eingabemittel (T) und/oder Ausgabemittel (AN) an flexiblen Befestigungsmitteln (TS) angeordnet sind wobei mittels ersten Detektoren die Geschwindigkeit des Fahrzeugs festgestellt wird, mittels zweiten Detektoren die Position der Ein- und/oder Ausgabemittel (T, AN) festgestellt wird, mittels dritten Detektoren festgestellt wird, ob sich neben dem Fahrer weitere Personen im Fahrzeug befinden wobei eine Steuereinheit die Signale der ersten, zweiten und dritten Detektoren auswertet und Funktionen der Ein- und/oder Ausgabemittel (T. AN) zumindest teilweise ändert, wenn das Fahrzeug eine Mindestgeschwindigkeit überschreitet und der Fahrer die Ein- und/oder Ausgabemittel (T, AN) aufgrund deren Position im Fahrzeug benutzen kann und sich keine weiteren Personen im Fahrzeug befinden.

2. Verfahren nach Anspruch 1,
**dadurch gekennzeichnet, daß**
die Ausgabemittel (AN) von optischer auf akustische Ausgabe umgeschaltet werden und/oder die Ein- und/oder Ausgabemittel (T, AN) gesperrt werden, wenn das Fahrzeug eine Mindestgeschwindigkeit überschreitet und entweder sich keine weiteren Personen im Fahrzeug befinden oder der Fahrer die Ein- und/oder Ausgabemittel (T, AN) aufgrund deren Position im Fahrzeug benutzen kann.

3. Anordnung zur Veränderung der Funktionen bei in einem Fahrzeug angeordneten Gerät, dessen Eingabemittel (T) und/oder Ausgabemittel (AN) an flexiblen Befestigungsmitteln (TS) angeordnet sind und welche erste, zweite und dritte Detektoren aufweist, wobei die ersten Detektoren zur Feststellung der Geschwindigkeit des Fahrzeugs, die zweiten Detektoren zur Feststellung der Position der Eingabemittel (T) und/der Ausgabemiitet (AN) im Fahrzeug und die dritten Detektoren zur Feststellung, ob sich weitere Personen neben dem Fahrer im Fahrzeug befinden, vorhanden sind, und die Signale der Detektoren einer Steuereinheit zugeleitet werden, wobei die Steuereinheit die Funktionen der Ein- und/oder Ausgabemittel (T, AN) zumindest teilweise ändert, wenn die ersten Detektoren erfassen, daß das Fahrzeug eine vordefinierte Mindestgeschwindigkeit überschreitet, die zweiten Detektoren erfassen, daß der Fahrer aufgrund der detektierten Position der Eingabemittel (T) und/oder der Ausgabemittel (AN) diese nutzen kann und die dritten Detektoren erfassen, daß keine weiteren Personen im Fahrzeug sind.

4. Anordnung nach Anspruch 3,
**dadurch gekennzeichnet, daß**
die dritten Detektoren zur Feststellung, ob sich weitere Personen im Fahrzeug befinden, durch Schalter in den Sitzen und/oder in den Gurtschlössem realisiert werden und/oder daß Infrarotmelder und/oder Lichtschranken vorgesehen sind.

5. Anordnung nach Anspruch 3 oder 4,
**dadurch gekennzeichnet, daß**
die Anordnung einen Sprachsynthesizer und einen Speicher für digitalisierte Sprachsignale aufweist und daß bei einer Änderung des Funktionsumfangs die Steuereinheit zwischen optischer und akustischer Ausgabe umschaltet.

6. Anordnung nach einem der Ansprüche 3 bis 5,
**dadurch gekennzeichnet, daß**
die Anordnung vor optische Ausgabemittel (AN) einschleifbar ist, wobei die optischen Ausgabemittel (AN) Bestandteil eines Funkempfängers sind.

## Claims

1. Method of altering the functions of an appliance that is disposed in a vehicle and whose input means (T) and/or output means (AN) are disposed at flexible attachment means (TS), wherein the speed of the vehicle is determined by means of first detectors, the position of the input and/or output means (T, AN) is determined by means of second detectors and whether further individuals in addition to the driver are located in the vehicle is determined by means of third detectors, and wherein a control unit evaluates the signals of the first, second and third detectors and changes, at least partially, functions of the input and/or output means (T, AN) if the vehicle exceeds a minimum speed and the driver can use the input and/or output means (T, AN) owing to their position in the vehicle and no further individuals are located in the vehicle.

2. Method according to Claim 1,
**characterized in that**
the output means (AN) are switched over from visual to audible output and/or the input and/or output means (T, AN) are/is disabled if the vehicle exceeds a minimum speed and either no further individuals are located in the vehicle or the driver can use the input and/or output means (T, AN) owing to their position in the vehicle.

3. Arrangement for altering the functions of an appliance that is disposed in a vehicle, whose input means (T) and/or output means (AN) are disposed at flexible attachment means (TS) and that has first, second and third detectors, wherein the first detectors are available for determining the speed of the vehicle, the second detectors for determining the position of the input means (T) and/or output means (AN) in the vehicle and the third detectors for determining whether further individuals in addition to the driver are located in the vehicle, and the signals of the detectors are fed to a control unit, and wherein the control unit changes, at least partially, the functions of the input and/or output means (T, AN) if the first detectors detect that the vehicle is exceeding a predefined minimum speed, the second detectors detect that the driver can use the input means (T) and/or the output means (AN) owing to the detected position of said means and the third detectors detect that no further individuals are in the vehicle.

4. Arrangement according to Claim 3,
**characterized in that**
the third detectors for determining whether further individuals are located in the vehicle are implemented by switches in the seats and/or in the belt fasteners and/or **in that** infrared sensors and/or light barriers are provided.

5. Arrangement according to Claim 3 or 4,
**characterized in that**
the arrangement has a speech synthesizer and a memory for digitized speech signals and **in that**, in the event of a change in the function range, the control unit switches over between visual and audible output.

6. Arrangement according to one of Claims 3 to 5,
**characterized in that**
the arrangement can be looped in upstream of visual output means (AN), wherein the visual output means (AN) are a component of a radio receiver.

## Revendications

1. Procédé pour modifier les fonctions dans un appareil installé dans un véhicule et dont les moyens d'entrée (T) et/ou les moyens de sortie (AN) sont disposés sur des moyens souples de fixation (TS), selon lequel la vitesse du véhicule est déterminée à l'aide de premiers détecteurs, la position des moyens d'entrée et/ou de sortie (T, AN) est déterminée au moyen de seconds détecteurs, une détermination est faite à l'aide de troisièmes détecteurs pour savoir si, en dehors du conducteur, d'autres personnes sont présentes dans le véhicule, auquel cas une unité de commande exploite les signaux des premiers, seconds et troisièmes détecteurs et modifie au moins partiellement les fonctions des moyens d'entrée et/ou de sortie (T, AN) lorsque le véhicule dépasse une vitesse minimale et que le conducteur peut utiliser les moyens d'entrée et/ou de sortie (T, AN) en raison de leur position dans le véhicule et qu'aucune autre personne n'est présente dans le véhicule.

2. Procédé selon la revendication 1, **caractérisé en ce que** les moyens de sortie (AN) sont commutés depuis une sortie optique sur une sortie acoustique et/ou que les moyens d'entrée et/ou de sortie (T, AN) sont bloqués lorsque le véhicule dépasse une vitesse minimale et qu'aucune autre personne n'est présente dans le véhicule ou bien que le conducteur peut utiliser les moyens d'entrée et/ou de sortie (T, AN) sur la base de leur position dans le véhicule.

3. Dispositif pour modifier les fonctions dans un appareil installé dans un véhicule, dont les moyens d'entrée (T) et/ou les moyens de sortie (AN) sont disposés sur des moyens souples de fixation (TS), ces moyens possédant des premiers, deuxièmes et troisièmes détecteurs, et dans lequel les premiers détecteurs sont prévus pour déterminer la vitesse du véhicule, les seconds détecteurs sont prévus pour déterminer la position des moyens d'entrée (T) et/ou des moyens de sortie (AN) et les troisièmes détecteurs sont prévus pour déterminer si, en dehors du conducteur, d'autres personnes sont présentes dans le véhicule, et les signaux des détecteurs sont envoyés à l'unité de commande, et dans lequel l'unité de commande modifie au moins partiellement les fonctions des moyens d'entrée et/ou de sortie (T, AN), lorsque les premiers détecteurs détectent que le véhicule dépasse une vitesse minimale prédéfinie, que les seconds détecteurs détectent qu'en raison de la position détectée des moyens d'entrée (T) et des moyens de sortie (AN), le conducteur peut utiliser ces moyens et que les troisièmes détecteurs détectent le fait qu'aucune autre personne n'est présente dans le véhicule.

4. Dispositif selon la revendication 3, **caractérisé en ce que** les troisièmes détecteurs servant à déterminer si d'autres personnes sont présentes dans le véhicule, sont formés par des interrupteurs situés dans les sièges et/ou dans les fermoirs de ceintures et/ou que des transmetteurs à infrarouge ou des relais photoélectriques sont prévus.

5. Dispositif selon la revendication 3 ou 4, **caractérisé en ce que** le dispositif comporte un synthétiseur vocal et une mémoire pour des signaux vocaux numérisés et que, dans le cas d'une variation du nombre des fonctions, l'unité de commande effectue une commutation entre une sortie optique et une sortie acoustique.

6. Dispositif selon l'une des revendications 3 à 5, **caractérisé en ce que** le dispositif peut être inséré en boucle en amont des moyens de sortie optique (AN), les moyens de sortie optique (AN) faisant partie d'un récepteur radio.
